# EUROPEAN PATENT APPLICATION

(11) **EP 4 509 745 A1**
(43) Date of publication of application: **19.02.2025**
(21) Application number: 24193961.0
(22) Date of filing: 09.08.2024
(51) Int. Cl.: F16L 3/137, F16L 3/233

(54) **FASTENER ASSEMBLY**

(30) Priority: 14.08.2023 US 202363532434 P; 05.08.2024 US 202418794769
(71) Applicant: Illinois Tool Works Inc., Glenview IL 60025 (US)
(72) Inventor: LEE, Joel R., Glenview, 60025 (US); STEVENSON, Jordan, Glenview, 60025 (US)
(74) Representative: HGF

(57) **Abstract**

Described is a fastener assembly (102) for coupling a tube (110) via a strap (140) to an opening (106) formed in a component (104). The fastener assembly includes a lock pin (108) having a shank (152) with a head (128) and a base structure (116) having a grommet portion (136). The shank includes a lock tab (160). The head includes a fixed planar portion (128b) coupled to the shank and at least one wing portion (128a) coupled to the fixed planar portion via a hinge (156). The head includes an installation indicator (126) positioned over at least a portion of each of the fixed planar portion and at least one wing portion. The grommet portion defines a grommet opening (138) and a pair of legs (150) resiliently coupled to the grommet portion and configured to couple with the opening. The grommet opening is configured to receive and secure at least a portion of the shank. A first leg of the pair of legs includes a flex leg feature (146) formed therein and resiliently coupled thereto, the flex leg feature defining a positioning edge (164). The lock tab engages with the positioning edge to secure the lock pin relative to the base structure in a part-in-assembly (PIA) position.

## Description

### RELATED APPLICATION

The present application claims priority to United States Provisional Patent Application No. 63/532,434, filed August 14, 2023, which is hereby incorporated by reference in its entirety.

### BACKGROUND

Automotive components require fastening techniques that are simple to manufacture and assemble. Further, fastening techniques should above all be reliable and efficient. In some instances, objects need to be secured to the vehicle to mitigate movement and/or shifting during operation, which can result in damage or kinking to the object. For example, tube, hoses, wires, and other objects are often secured to the vehicle components via fasteners. When a fastener is installed incorrectly such that the fastener is not fully inserted into the opening, the fastener can detach and/or the object being fastened can become damaged or loose. Similarly, when an object is attached incorrectly to a fastener, the object can detach from the fastener or become damaged or loose.

Therefore, it would be desirable to provide an installation indicator to enhance proper installation of the object relative to the fastener and/or the fastener relative to the component during assembly.

### SUMMARY

The present disclosure relates generally to a fastening system to form a connection between the components, such as tubes and a component. More specifically, a fastener with an installation indicator to enhance proper installation of the object relative to the fastener and/or the fastener relative to the component during assembly, substantially as illustrated by and described in connection with at least one of the figures, as set forth more completely in the claims.

### DRAWINGS

The foregoing and other objects, features, and advantages of the devices, systems, and methods described herein will be apparent from the following description of particular examples thereof, as illustrated in the accompanying figures; where like or similar reference numbers refer to like or similar structures. The figures are not necessarily to scale, emphasis instead being placed upon illustrating the principles of the devices, systems, and methods described herein.
Figures 1a and 1b illustrate a fastening system configured to secure one or more tubes relative to a component via a fastener assembly in accordance with aspects of this disclosure.
Figures 1c and 1d illustrate, respectively, assembly and assembled perspective views of the fastener assembly.
Figures 1e and 1f illustrate, respectively, first and second side elevation views of the fastener assembly during assembly with the component.
Figures 1g and 1h illustrate, respectively, first and second side elevation views of the fastener assembly assembled with the component.
Figure 1i illustrates a top plan view of the fastener assembly.
Figure 1j illustrates a side elevation view of the fastening system taken along cutline A-A (Figure 1f).
Figure 1k illustrates a side elevation view of the fastening system taken along cutline B-B (Figure 1h).
Figures 2a through 2c illustrate, respectively, first side elevation, top plan, and second side elevation views of the fastening system in a first position.
Figure 2d illustrates a perspective cross-sectional view of the fastening system taken along cutline C-C (Figure 2c) in the first position.
Figures 3a through 3c illustrate, respectively, first side elevation, top plan, and second side elevation views of the fastening system in a second position.
Figure 3d illustrates a perspective cross-sectional view of the fastening system taken along cutline D-D (Figure 2c) in the second position.
Figures 4a and 4b illustrate, respectively, assembly and assembled isometric views of the fastener assembly with the component and a verification system.
Figures 5a through 5e illustrate, respectively, perspective, top plan, bottom plan, first side elevation, and second side elevation views of the lock pin in accordance with another aspect of this disclosure.
Figures 6a through 6e illustrate, respectively, perspective, top plan, bottom plan, first side elevation, and second side elevation views of the lock pin in accordance with yet another aspect of this disclosure.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein is not intended to be limiting, referring instead individually to any and all values falling within and/or including the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms. For example, while in some examples a first side is located adjacent to or near a second side, the terms "first side" and "second side" do not imply any specific order in which the sides are ordered.

The terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the disclosure. The use of any and all examples, or exemplary language ("e.g.," "such as," or the like) provided herein, is intended merely to better illuminate the disclosed examples and does not pose a limitation on the scope of the disclosure. The terms "e.g.," and "for example" set off lists of one or more non-limiting examples, instances, or illustrations. No language in the specification should be construed as indicating any unclaimed element as essential to the practice of the disclosed examples.

The term "processor" means processing devices, apparatuses, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general-purpose microprocessor or microcontroller, a digital signal processing (DSP) processor, an application-specific integrated circuit (ASIC). The processor may be coupled to or integrated with a memory device. The memory device can be any suitable type of computer memory or any other type of electronic storage medium, such as, for example, read-only memory (ROM), random access memory (RAM), cache memory, compact disc read-only memory (CD-ROM), electro-optical memory, magneto-optical memory, programmable read-only memory (PROM), erasable programmable read-only memory (EPROM), electrically erasable programmable read-only memory (EEPROM), a computer-readable medium, or the like.

The term "and/or" means any one or more of the items in the list joined by "and/or." As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y, and z."

Disclosed is a fastener assembly can be used to couple an object to a component, such as a tube to an automotive component. The disclosure introduces several novel features that enhance its operation, functionality, and usability. Notably, the disclosed fastener assembly provides assembly verification, ensuring that each component is correctly assembled through a vision system that is scannable and verifiable. The disclosed fastener assembly incorporates an all-plastic solution, eliminating the need for traditional metal bolts and heavy tools, thus allowing for a no-tool assembly process. This is particularly advantageous in assembly line settings where previous fastener assemblies required bolts and heavy tools, resulting in increased weight and complexity. By addressing these deficiencies, the disclosed fastener assembly offers significant advantages, including reduced weight and the ability to easily verify proper installation using vision systems. The lightweight, tool-free assembly process streamlines operations and enhances efficiency, making it a superior alternative to conventional methods.

In one example, a fastener assembly for coupling a tube via a strap to an opening formed in a component comprises: a lock pin having a shank with a head, wherein the shank comprises a lock tab, and wherein the head comprises a fixed planar portion coupled to the shank and at least one wing portion coupled to the fixed planar portion via a hinge, and wherein the head comprises an installation indicator positioned over at least a portion of each of the fixed planar portion and at least one wing portion; and a base structure having a grommet portion that defines a grommet opening and a pair of legs resiliently coupled to the grommet portion and configured to couple with the opening, wherein the grommet opening is configured to receive and secure at least a portion of the shank, wherein a first leg of the pair of legs includes a flex leg feature formed therein and resiliently coupled thereto, the flex leg feature defining a positioning edge, and wherein the lock tab is configured to engage with the positioning edge to secure the lock pin relative to the base structure in a part-in-assembly (PIA) position.

In another example, a fastener assembly for coupling a tube via a strap to an opening formed in a component comprises: a lock pin having a shank with a head, wherein the shank comprises a lock tab; and a base structure having a grommet portion that defines a grommet opening and a pair of legs resiliently coupled to the grommet portion and configured to couple with the opening, wherein the grommet opening is configured to receive and secure at least a portion of the shank, wherein a first leg of the pair of legs includes a flex leg feature formed therein and resiliently coupled thereto, the flex leg feature defining a positioning edge, and wherein the lock tab is configured to engage with the positioning edge to secure the lock pin relative to the base structure in a part-in-assembly (PIA) position.

In yet another example, a fastening system comprises: a fastener assembly having a lock pin and a base structure, wherein the lock pin includes a shank having a head at an end and a lock tab along its length, wherein the base structure comprises a pair of legs resiliently coupled to a grommet portion, wherein a first leg of the pair of legs includes a flex leg feature formed therein and resiliently coupled thereto, the flex leg feature defining a positioning edge, and wherein the lock tab is configured to engage with the positioning edge to secure the lock pin relative to the base structure in a part-in-assembly (PIA) position; an installation indicator positioned in or on the fastener assembly; and a reader separate from the fastener assembly and operatively coupled to a computer, the reader configured, via a processor, to track the installation indicator during installation of the lock pin relative to the base structure.

In some examples, the head comprises an installation indicator.

In some examples, the installation indicator is a fiducial marker.

In some examples, the head comprises a fixed planar portion coupled to the shank and at least one wing portion coupled to the fixed planar portion via a hinge.

In some examples, the wing portion is configured to pivot, bend, or move relative to the fixed planar portion.

In some examples, the wing portion is movable between a first position that is transverse to the fixed planar portion and a second position that is in plane with the fixed planar portion.

In some examples, the first position corresponds to a pre-installation position and the second position corresponds to an installed position.

In some examples, the installation indicator is a quick response (QR) code.

In some examples, the strap is a zip tie or a cable strap.

In some examples, the head comprises a fixed planar portion coupled to the shank and two wing portions, wherein each of the two wing portions is coupled to the fixed planar portion via a hinge.

In some examples, the fixed planar portion and two wing portions define an oval-shaped perimeter.

In some examples, the flex leg feature is configured to move from the PIA position to an intermediary position upon installation into the component, allowing the lock tab to clear the flex leg feature and permitting the lock pin to be pushed to assume a final assembled position.

In some examples, the base structure comprises a payload portion that defines one or more strap openings configured to receive the strap.

In some examples, the lock tab is positioned on a first surface of the shank and the shank comprises a second lock tab positioned on a second surface of the shank that is opposed to the first surface.

In some examples, the second lock tab is configured to engage with a second positioning edge of a second flex leg feature of a second leg of the pair of legs.

In some examples, each of the pair of legs comprises an inner protrusion oriented toward a central longitudinal axis and an outer protrusion oriented away from the central longitudinal axis.

In some examples, the lock pin is configured to engage the inner protrusion to bias the pair of legs away from the central longitudinal axis to engage the component via the outer protrusion.

In some examples, the head comprises one or more ridge features configured to protect the at least one wing portions.

In some examples, the shank comprises a protrusion feature configured to mitigate unwanted movements.

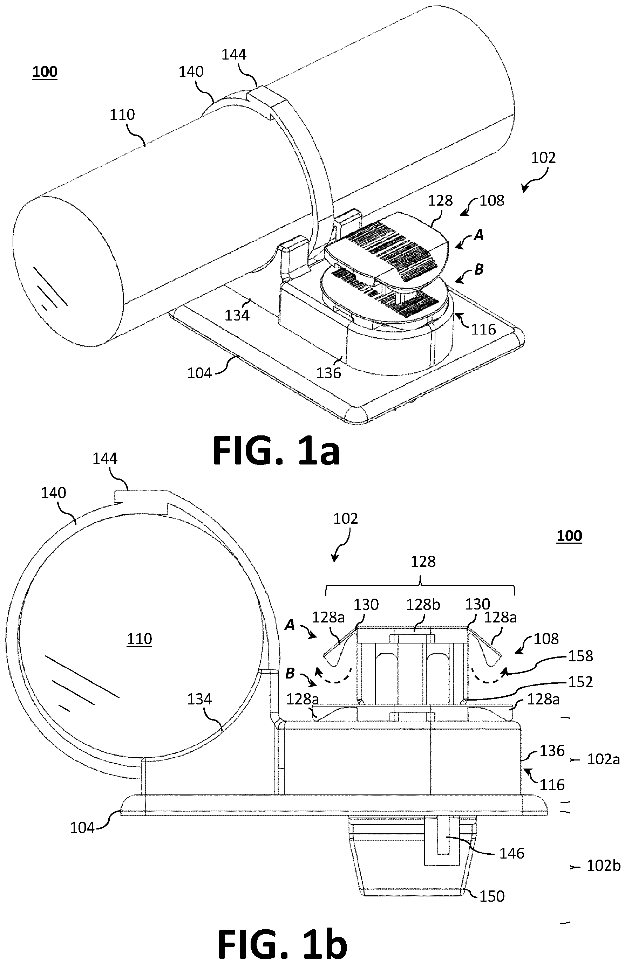

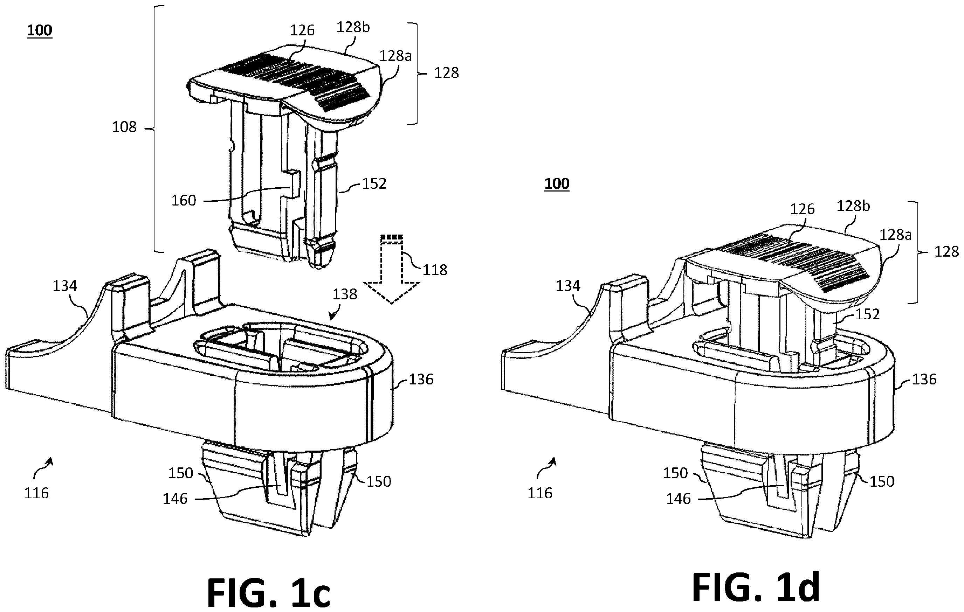

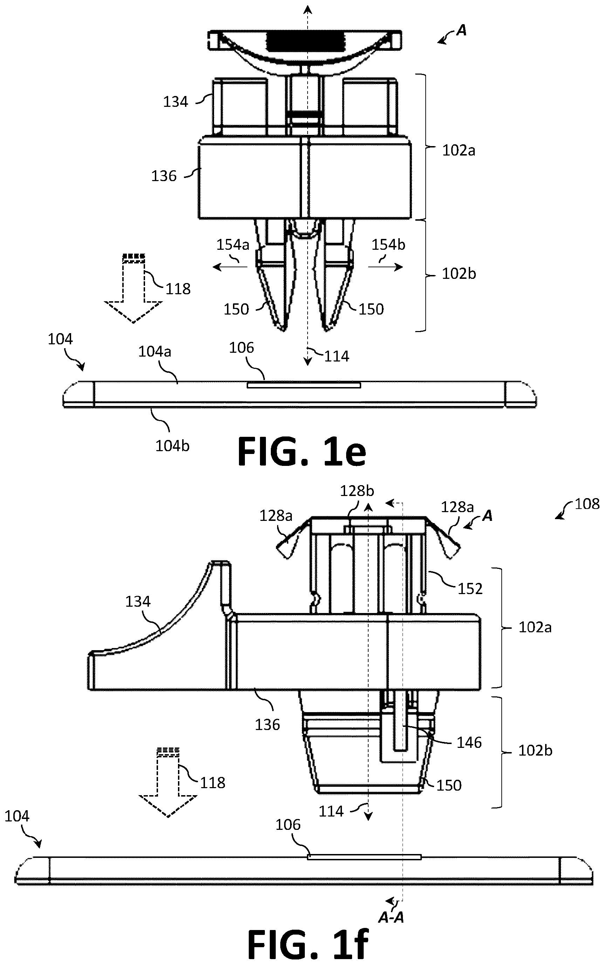

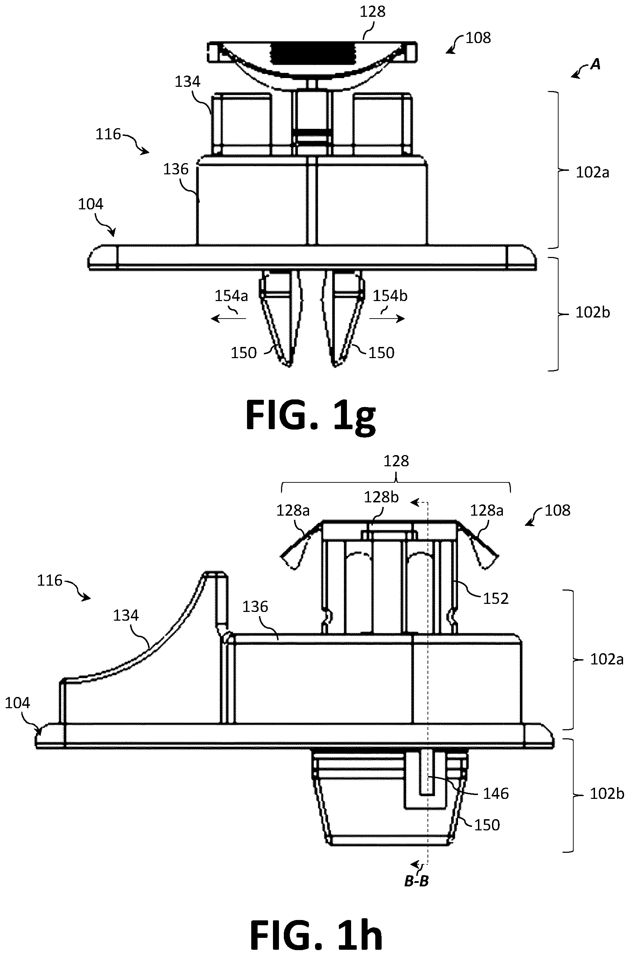

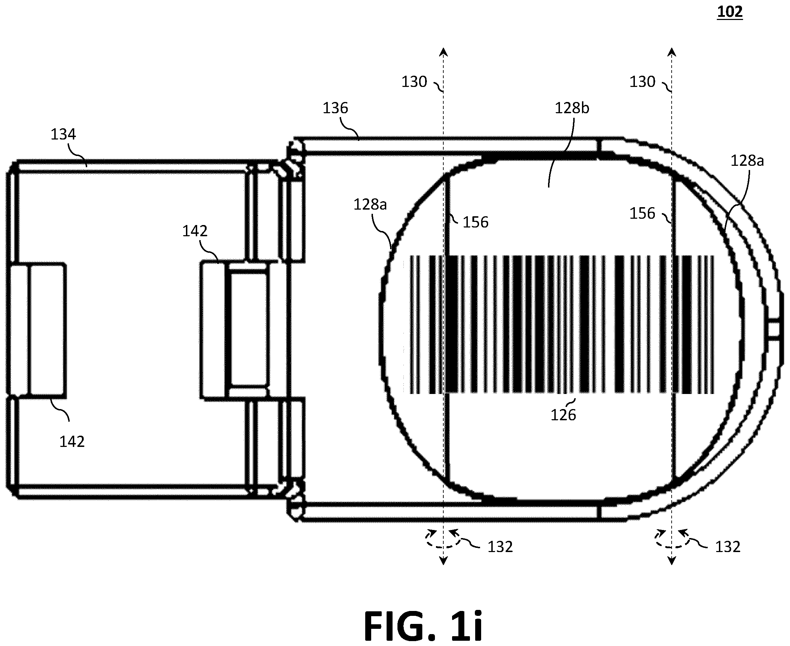

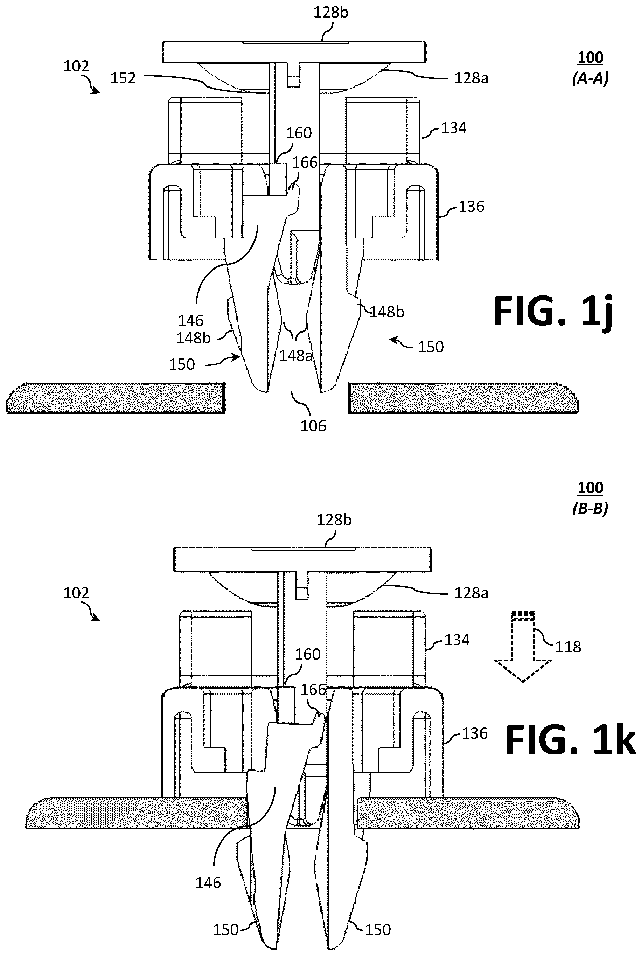

Figures 1a and 1b illustrate a fastening system 100 configured to secure one or more tubes 110 relative to a component 104 via a fastener assembly 102 in accordance with this disclosure. Figures 1c and 1d illustrate assembly and assembled perspective views of the fastener assembly 102, respectively. Figures 1e and 1f illustrate first and second side elevation views of the fastener assembly 102 during assembly with the component 104, respectively. Figures 1g and 1h illustrate first and second side elevation views of the fastener assembly 102 assembled with the component 104, respectively. Figure 1i illustrates a top plan view of the fastener assembly 102. Figure 1j illustrates a side elevation view of the fastening system 100 taken along cutline A-A (Figure 1f). Figure 1k illustrates a side elevation view of the fastening system 100 taken along cutline B-B (Figure 1h).

The illustrated fastening system 100 generally comprises a fastener assembly 102 for installation in a component 104. As best illustrated in Figure 1c, the component 104 defines an opening 106 configured to receive and retain the fastener assembly 102 relative to the component 104 (or another structure). The component 104 defines an A-side surface 104a (e.g., a first surface, such as an exterior surface) and a B-side surface 104b (e.g., a second surface, such as an interior surface). The one or more tubes 110 are illustrated as being secured to the A-side surface 104a. The component 104 may be, for example, an automotive panel or a structural component of a vehicle, such as doors, pillars (e.g., an A-pillar, B-pillar, C-pillar, etc.), dashboard components (e.g., a cross member, bracket, frame, etc.), seat frames, center consoles, fenders, sheet metal framework, or the like.

Depending on the application, the component 104 may be fabricated from metal (or a metal alloy), synthetic or semi-synthetic polymers (e.g., plastics such as acrylonitrile butadiene styrene (ABS) and polyvinyl chloride (PVC)), composite materials (e.g., fiberglass), or a combination thereof. The component 104 may include, define, or otherwise provide an opening 106 (e.g., a hole) formed during the manufacturing of the component 104. In this example, the opening 106 is generally rectangular, but other shapes are contemplated (e.g., circles, ovals, triangles, and other quadrilaterals).

The fastener assembly 102 includes two or more components, illustrated as a lock pin 108 and a base structure 116 that can be assembled together to assume a shipped (pre-install) position, an example of which is illustrated in Figure 1d. The base structure 116 may include, define, or otherwise provide a carrier portion 102a and a fastener portion 102b. The fastener assembly 102 is designed to snap into the opening of the component 104 via the fastener portion 102b.

The carrier portion 102a is configured to couple with and/or secure the tubes 110 (or another object) relative to one another and, ultimately, to the component 104. In the illustrated example, the carrier portion 102a comprises a payload portion 134 and a grommet portion 136. The payload portion 134 is configured to couple with the tube 110 and, as best illustrated in Figure 1c, the grommet portion 136 defines a grommet opening 138 configured to receive and engage the lock pin 108.

The illustrated fastener assembly 102 includes one or more features in or on the base structure 116 that allow a strap 140 to fasten the fastener assembly 102 with a tube 110. In the illustrated examples, the features are provided in the form of two or more strap openings 142 formed in or through at least a portion of the base structure 116, such as the payload portion 134. The strap 140 is configured to pass through the one or more strap openings 142 (two in the illustrated example) and form a loop about the tube 110. The free ends of the strap 140 can be joined to one another via, for example, a strap fastener 144 to secure the tube 110. The strap fastener 144 can be a ratcheting mechanism, latch, snap, clips, hook and loop fastener, or the like. In some examples, the strap 140 and strap fastener 144 are provided as a zip tie or cable tie.

While a single strap 140 is illustrated, additional or fewer straps 140 can be provided depending on the design needs (e.g., the number of tubes 110 that need to be secured). The dimensions of the carrier portion 102a would be adjusted accordingly to accommodate the desired number of straps 140 and/or tubes 110. Again, while described primarily as a fastener configured to attach tubes 110, the fastener assembly 102 can be used to attach other objects and components.

The fastener portion 102b of the illustrated fastener assembly 102 serves to couple the carrier portion 102a to the component 104. During assembly, the fastener portion 102b of the fastener assembly 102 is inserted into the opening 106 in the component 104 in the direction shown by arrow 118. The one or more tubes 110 may be, for example, brake lines, fuel lines, cables (e.g., electric cables), pipes, and/or any other tubular structure that may be secured to a component 104. While the fastener assembly 102 is described primarily as a fastener configured to attach tubes 110, it can be used to attach other objects and components as well.

The fastener portion 102b is generally perpendicular to the carrier portion 102a, such that a central longitudinal axis 114 runs down the center of the fastener portion 102b. The fastener portion 102b comprises a pair of legs 150 resiliently coupled to or to an underside of the carrier portion 102a. Each of the pair of legs 150 may define one or more protrusions 148a, 148b or other features to interact with the shank 152 of the lock pin 108 and with the component 104 adjacent the opening 106 when fully assembled. Each of the pair of legs 150 comprises an inner protrusion 148a (i.e., oriented towards one another and toward the central longitudinal axis 114) and an outer protrusion 148b (i.e., oriented away from one another and away from the central longitudinal axis 114).

The legs 150 are configured to deflect inward toward the central longitudinal axis 114 as the fastener portion 102b is passed through the opening 106 in the component 104. To form the connection with the component 104, the fastener portion 102b of the fastener assembly 102 is inserted into the opening 106 formed in or on a surface of the component 104 as indicated by arrow 118. In some examples, the fastener portion 102b can extend beyond the component 104 to exit and protrude from the B-side surface 104b, as best illustrated in Figures 1b, 1g, and 1h. In this example, the shank 152 is configured to engage the inner protrusions 148a and bias the pair of legs 150 outwardly, as indicated by arrows 154a and 154b, as the lock pin 108 is inserted into the grommet opening 138 of the base structure 116 in the direction indicated by arrow 118. This outward biasing of the pair of legs 150 causes the outer protrusions 148b to move outward, securing the fastener portion 102b within the opening 106 (e.g., by abutting the B-side surface 104b to resist pullout).

The fastener portion 102b can be integrated with the carrier portion 102a or attached during assembly (e.g., via adhesives, a welding process, a mechanical coupling, or the like). In some examples, the fastener assembly 102 may include additional features, such as ribs and wings to mitigate noise and/or rattle between the fastener assembly 102 and the component 104.

If a tube 110 and/or the fastener assembly 102 is installed or otherwise positioned incorrectly, the fastener assembly 102 could detach from the component 104, and/or the one or more tubes 110 could become misaligned or detached from the fastener assembly 102. Similarly, when a tube 110 is attached incorrectly to a fastener assembly 102, the tube 110 can detach from the fastener assembly 102 or become damaged or loose.

The two components of the fastener assembly 102 may each be formed as a unitary structure. For example, the lock pin 108 and the base structure 116 can each be fabricated via mold tooling and a plastic-injection molding process. In another example, one or both of the lock pin 108 and the base structure 116 can be a printed thermoplastic material component that can be printed with great accuracy and with numerous details, which is particularly advantageous for creating components requiring complex and/or precise features. Additive manufacturing techniques obviate the need for mold tooling typically associated with plastic injection molding, thereby lowering up-front manufacturing costs, which is particularly advantageous in low-volume productions. In some examples, the fastener assembly 102 may be fabricated using material extrusion (e.g., fused deposition modeling (FDM), stereolithography (SLA), selective laser sintering (SLS), material jetting, binder jetting, powder bed fusion, directed energy deposition, VAT photopolymerization, and/or any other suitable type of additive manufacturing/3D printing process).

Additive manufacturing techniques print objects in three dimensions, therefore both the minimum feature size (i.e., resolution) of the X-Y plane (horizontal resolution) and the layer height in Z-axis (vertical resolution) are considered in overall printer resolution. Horizontal resolution is the smallest movement the printer's extruder can make within a layer on the X and the Y axis, while vertical resolution is the minimal thickness of a layer that the printer produces in one pass. Printer resolution describes layer thickness and X-Y resolution in dots per inch (DPI) or micrometers (µm). The particles (3D dots) in the horizontal resolution can be around 50 to 100 µm (510 to 250 DPI) in diameter.

Typical layer thickness (vertical resolution) is around 100 µm (250 DPI), although the layers may be as thin as 16 µm (1,600 DPI). The smaller the particles, the higher the horizontal resolution (i.e., higher the details the printer produces). Similarly, the smaller the layer thickness in Z-axis, the higher the vertical resolution (i.e., the smoother the printed surface will be). A printing process in a higher vertical resolution printing, however, will take longer to produce finer layers as the printer has to produce more layers. In some examples, the fastener assembly 102 may be formed or otherwise fabricated at different resolutions during a printing operation. For example, the carrier portion 102a (or portions thereof) may be printed at a higher resolution than that of the fastener portion 102b or vice versa as needed for a particular application.

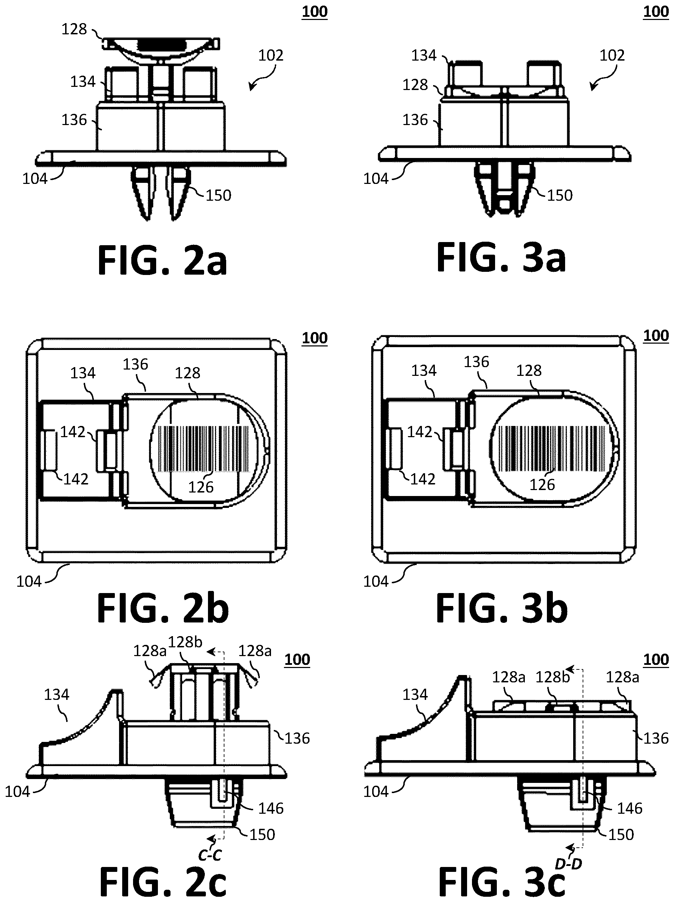

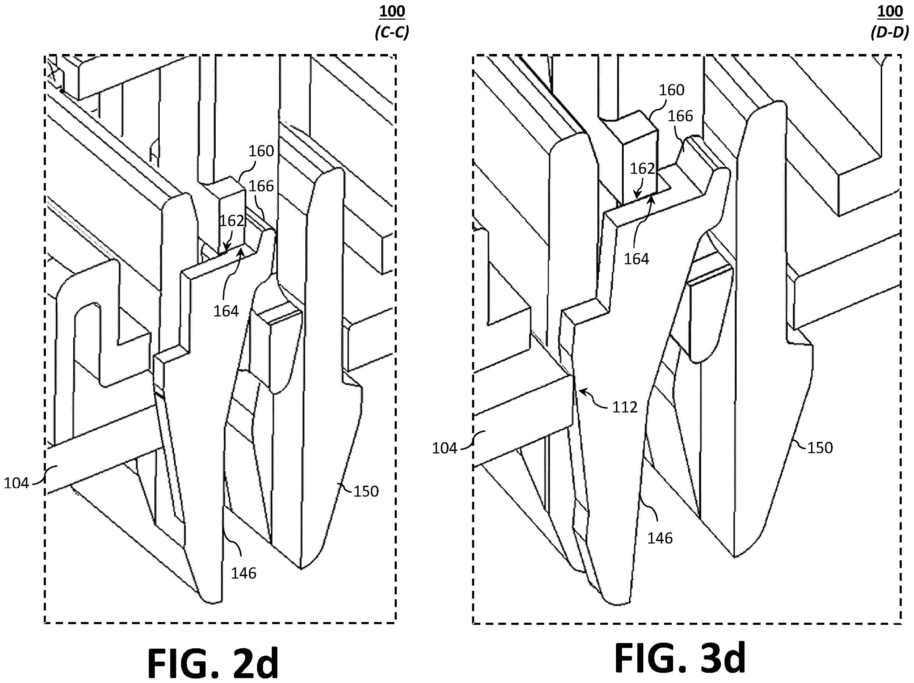

Figures 2a through 2c and Figures 3a through 3c illustrate views of the fastening system 100 in, respectively, a first position (illustrated as Tab Position A) and a second position (illustrated as Tab Position B). Specifically, Figures 2a through 2c illustrate, respectively, first side elevation, top plan, and second side elevation views of the fastening system 100 in the first position, while Figure 2d illustrates a perspective cross-sectional view of the fastening system 100 taken along cutline C-C (Figure 2c) in the first position. Correspondingly, Figures 3a through 3c illustrate, respectively, first side elevation, top plan, and second side elevation views of the fastening system 100 in a second position, while Figure 3d illustrates a perspective cross-sectional view of the fastening system 100 taken along cutline D-D (Figure 2c) in the second position.

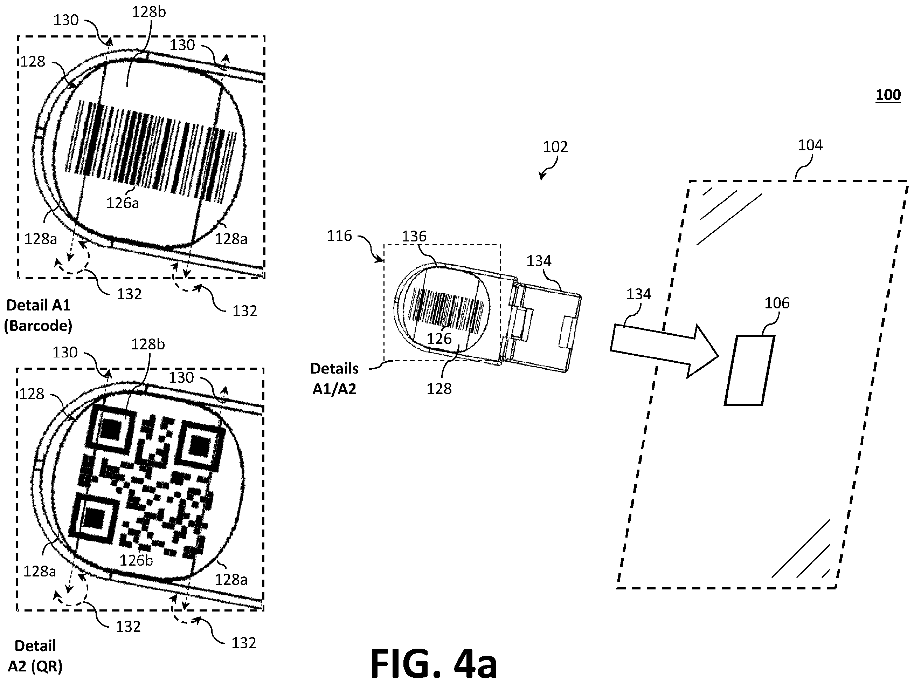

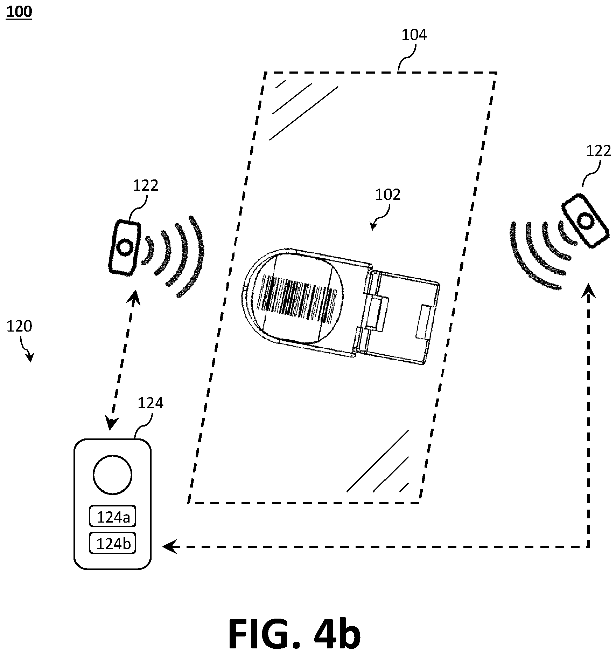

In the illustrated example, to facilitate tracking, the fastener assembly 102 includes a lock pin 108 having a head 128 coupled to the shank 152. The head 128 defines a generally planar surface that supports and/or provides an installation indicator 126, which can be tracked by a visual quality system 120 (as illustrated and described in Figures 4a and 4b) and/or checked manually. When in the fully installed position, the head 128 is a generally flat structure composed of a fixed planar portion 128b (fixed relative to the shank 152) and one or more movable wing portions 128a. In the illustrated example, the head 128 comprises a fixed planar portion 128b and two movable wing portions 128a positioned on opposite sides of the fixed planar portion 128b.

The head 128 and/or the installation indicator 126 may be integral with the fastener assembly 102. The head 128 includes or provides the installation indicator 126, which can be a 2-dimensional fiducial marker (e.g., a barcode, quick response (QR) code, AprilTag, etc.) positioned on the wing portions 128a of the head 128. Example barcode 126a and QR code 126b fiducial markers are illustrated in Details A1 and A2 of Figure 1c. While the head 128 is illustrated as a generally flat structure, other shapes can be used to orient the installation indicator 126 at the appropriate angle relative to the reader 122 when the component 104 is properly inserted and seated into the opening 106 of the component 104. In another example, the installation indicator 126 can be a 3-dimensional fiducial marker formed on the head 128. In some examples, the head 128 can also serve to secure the tube 110 in place.

To facilitate movement, the head 128 includes or defines one or more hinges 156 that allow the wing portions 128a to pivot, bend, or move relative to the fixed planar portion 128b of the head 128 about a pivot axis 130 as indicated by arrows 132. In one example, the wing portions 128a are configured to pivot about the pivot axis 130 between a first position (e.g., a shipped position identified as position A, such as a partially assembled position) and a second position (e.g., an installed position identified as position B, where the lock pin 108 is properly seated in the base structure 116). As the tube 110 is seated in the base structure 116, the outer surface of the tube 110 contacts the head 128 and rotates it about the pivot axis 130 as indicated by arrow 132 from the first position to the second position (or vice versa as the tube 110 is removed from the base structure 116).

When the lock pin 108 is properly inserted into the base structure 116, the base structure 116 causes the wing portions 128a of the lock pin 108 to pivot about the pivot axis 130 to assume a second position. When the lock pin 108 is inserted into the base structure 116 improperly (or another anomaly occurs), the head 128 would assume a third position (e.g., an intermediate position between the first and second positions, such as another non-planar position).

With reference to Figure 1i, a first section of the installation indicator 126 is arranged on the fixed planar portion 128b of the head 128. To the right and to the left of the fixed planar portion 128b, a wing portion 128a in the form of a curved plate is connected to the fixed planar portion 128b by means of a film hinge 156 as in the first embodiment. Each of the two wing portions 128a carries a further section of the installation indicator 126. In the first position (position A) of the wing portions 128a, the wing portions 128a hang down at an angle such that the installation indicator 126 cannot be read by a visual quality system 120. Once the head 128 has assumed its final, fully seated mounting position (position B) after the push-in process in the direction indicated by arrow 118, with the two wing portions 128a having been swiveled as indicated by arrows 158 relative to the fixed planar portion 128b due to contact with portions of the grommet portion 136, the fixed planar portion 128b and the two wing portions 128a are in one plane. The installation indicator 126 can now be read by the visual quality system 120.

The fastener assembly 102 is designed to attach to a vehicle frame after being pre-attached to a wire harness or similar component via a strap 140, such as a zip tie or cable strap.

During shipping, with reference to Figures 2d and 3d, features on the lock pin 108 and base structure 116 ensure the lock pin 108 remains in the proper location (e.g., a part-in-assembly (PIA) position) until it is inserted into the component 104. The lock tab 160 of the lock pin 108 has an engagement ledge 162 that engages the positioning edge 164 at the distal end 166 of the flex leg feature 146 of the base structure 116, preventing movement when a force is applied in the direction indicated by arrow 118.

Once received by the customer, the first step is to attach the fastener assembly 102 to a bundle with a strap 140 and then insert it into the component 104. During shipping, features on the lock pin 108 and base structure 116 keep the lock pin 108 in the proper location until it is inserted into the component 104. During installation into component 104, the flex leg feature 146 of the base structure 116 contacts the edge feature 112 of the component 104. In this example, these features are symmetrical on each side of the fastener assembly 102.

Once installed into component 104, the flex leg feature 146 moves into a new position, allowing the lock tab 160 to clear the flex leg feature 146 of the base structure 116 and disengage them. This permits the lock pin 108 to be pushed into the final assembled position. Before the lock pin 108 is fully installed, the visual quality system 120 cannot read the barcode/QR code engraved on the top of the lock pin 108 on the fixed planar portion 128b and wing portions 128a. Once the lock pin 108 is fully seated, the legs 150 are pushed outwardly in directions as indicated by arrows 154a and 154b (Figure 1h), causing them to engage and fasten to component 104. The wing portions 128a are bent to a flat position, allowing the visual quality system 120 to read and validate the correct and complete installation.

Figures 4a and 4b illustrate, respectively, assembly and assembled isometric views of the fastener assembly 102 with the component 104 and a verification system. As illustrated, the fastening system 100 can be used with a visual quality system 120 having a reader 122 and a computer 124. The visual quality system 120 (or a component thereof) can be positioned adjacent to the fastener assembly 102 and/or component 104 to monitor the assembly of the fastener assembly 102 with the component 104 and/or the insertion of the tubes 110. In the illustrated example, the visual quality system 120 includes, inter alia, a reader 122 communicatively coupled to a computer 124. The reader 122 can be communicatively coupled to the computer 124 via a wired or wireless link. The reader 122 is arranged to image or otherwise track the installation indicator 126 associated with the fastener assembly 102.

In some examples, the head 128 is designed such that the one or more installation indicators 126 are not visible to the visual quality system 120 until the lock pin 108 is fully assembled. That is, when the lock pin 108 is properly seated in the base structure 116 and/or the fastener assembly 102 is properly seated into the opening 106 of the component 104. For example, if a lock pin 108 is not fully inserted, the head 128 will not assume the second position (e.g., the wing portions 128a will not be planar with the fixed planar portion 128b) and the visual quality system 120 would either not detect the installation indicators 126 or determine that the angle is incorrect. In either case, the visual quality system 120 would indicate an error or anomaly.

If the computer 124, via one or more processors 124a coupled to a memory device 124b, determines based at least in part on the one or more installation indicators 126 that the fastener assembly 102 is not properly mounted to the component 104 an alert may be communicated to the operator (e.g., via a portable communication device) and/or, if robotic assembly is employed, the robot may automatically repeat the assembly process to correct the error.

While one installation indicator 126 is illustrated, additional or fewer installation indicators 126 can be employed and associated with the fastener assembly 102 during installation. Further, additional installation indicators 126 can be formed in or on the fastener assembly 102 to provide redundancy and/or increase accuracy by having multiple positional data points. In some examples, in addition to or in lieu of the head 128, one or more installation indicators 126 can be positioned on another portion of the carrier portion 102a (e.g., a sidewall thereof).

The installation indicator 126 is coupled to the head 128. The installation indicator 126 can be printed on the head 128 directly, applied as a sticker, or otherwise affixed. The wing portions 128a are coupled to the fixed planar portion 128b of the head 128 via hinges 156. The wing portions 128a are configured to pivot between the first position and the second position. Specifically, the head 128 assumes the second position when the lock pin 108 is properly seated into the tube base structure 116 of the carrier portion 102a. The reader 122, which is separate from the fastener assembly 102 and operatively coupled to a computer, is configured, via the processor 124a, to track the installation indicator 126 during the installation of the tube 110 or the fastener assembly 102.

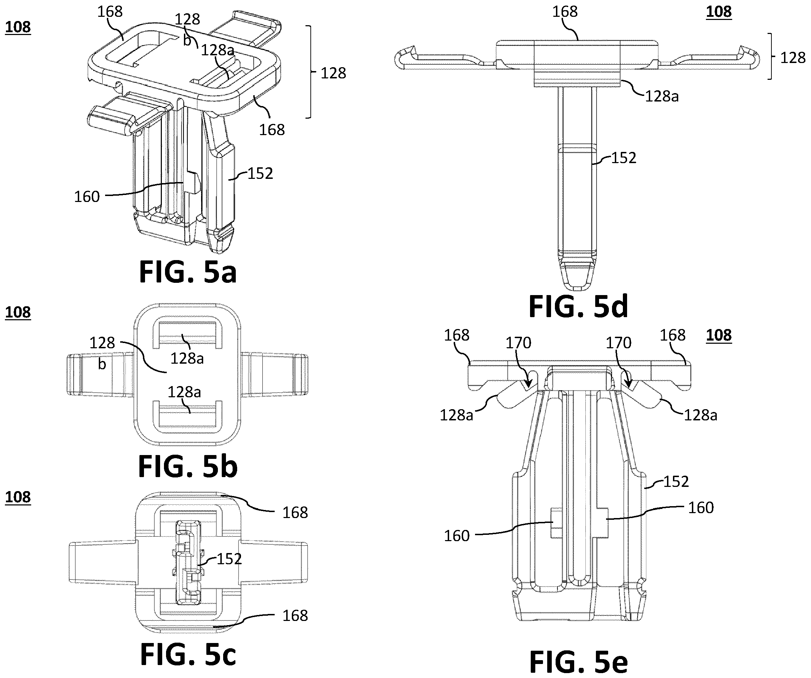

Figures 5a through 5e illustrate, respectively, perspective, top plan, bottom plan, first side elevation, and second side elevation views of the lock pin in accordance with another aspect of this disclosure. The lock pin 108 component may also be produced with wing portions 128a, which are protected by ridge features 168. These features prevent inadvertent or unwanted contact with other components that might bend the wing portions 128a. These wing portions 128a are designed with a break in the surface 170 to enable bending. Additionally, when a code is etched on the surface, it cannot be read by a code scanner in this position. When inserting the lock pin 108 component, a force is applied in direction shown by arrow 118. When the wing portions 128a contact the base structure 116 component, they are forced upward. Upon full installation, the break in the surface 170 becomes non-existent, and the installation indicator 126 is made whole and scannable.

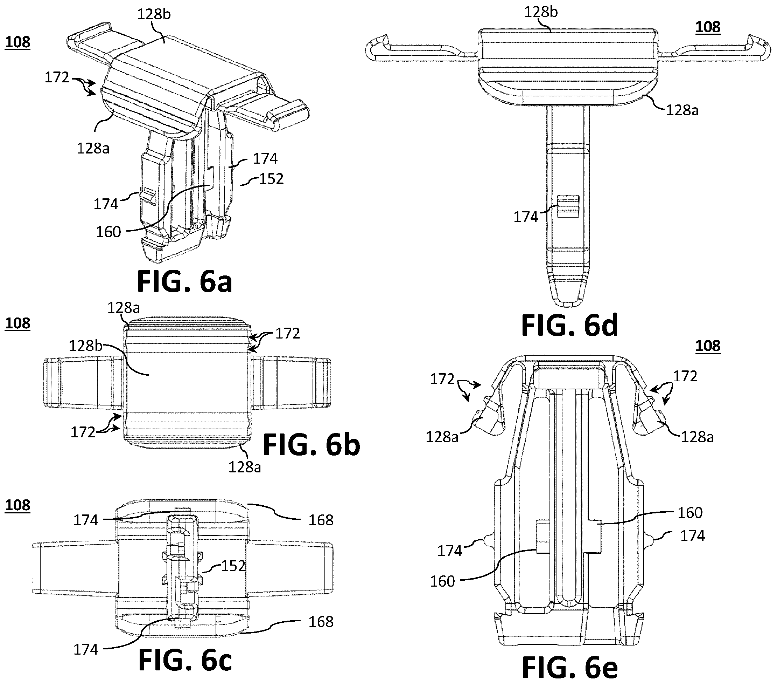

Figures 6a through 6e illustrate, respectively, perspective, top plan, bottom plan, first side elevation, and second side elevation views of the lock pin in accordance with yet another aspect of this disclosure. The lock pin 108 component may also be produced with wing portions 128a having angled visual disturbance indentations 172. These provide a second stage of protection against the scanner reading the code prior to full installation of the lock pin 108 in the base structure 116. Additionally, during installation, protrusion features 174 have been added to the lock pin 108 component. These stabilize the pin during assembly, preventing unwanted movements.

While the present method and/or system has been described with reference to certain implementations, it will be understood by those skilled in the art that various changes may be made and equivalents may be substituted without departing from the scope of the present method and/or system. In addition, many modifications may be made to adapt a particular situation or material to the teachings of the present disclosure without departing from its scope. For example, block and/or components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.
Certain embodiments of the invention are described in the following clauses:
Clause 1. A fastener assembly for coupling a tube via a strap to an opening formed in a component, the fastener assembly comprising:
   a lock pin having a shank with a head,
      wherein the shank comprises a lock tab, and
      wherein the head comprises a fixed planar portion coupled to the shank and at least one wing portion coupled to the fixed planar portion via a hinge, and
      wherein the head comprises an installation indicator positioned over at least a portion of each of the fixed planar portion and at least one wing portion; and
   a base structure having a grommet portion that defines a grommet opening and a pair of legs resiliently coupled to the grommet portion and configured to couple with the opening,
      wherein the grommet opening is configured to receive and secure at least a portion of the shank,
      wherein a first leg of the pair of legs includes a flex leg feature formed therein and resiliently coupled thereto, the flex leg feature defining a positioning edge, and
      wherein the lock tab is configured to engage with the positioning edge to secure the lock pin relative to the base structure in a part-in-assembly (PIA) position.
Clause 2. A fastener assembly for coupling a tube via a strap to an opening formed in a component, the fastener assembly comprising:
   a lock pin having a shank with a head, wherein the shank comprises a lock tab; and
   a base structure having a grommet portion that defines a grommet opening and a pair of legs resiliently coupled to the grommet portion and configured to couple with the opening,
      wherein the grommet opening is configured to receive and secure at least a portion of the shank,
      wherein a first leg of the pair of legs includes a flex leg feature formed therein and resiliently coupled thereto, the flex leg feature defining a positioning edge, and
      wherein the lock tab is configured to engage with the positioning edge to secure the lock pin relative to the base structure in a part-in-assembly (PIA) position.
Clause 3. The fastener assembly of clause 2, wherein the head comprises an installation indicator.
Clause 4. The fastener assembly of clause 3, wherein the installation indicator is a fiducial marker.
Clause 5. The fastener assembly of clause 3, wherein the head comprises a fixed planar portion coupled to the shank and at least one wing portion coupled to the fixed planar portion via a hinge.
Clause 6. The fastener assembly of clause 5, wherein the wing portion is configured to pivot, bend, or move relative to the fixed planar portion.
Clause 7. The fastener assembly of clause 6, wherein the wing portion is movable between a first position that is transverse to the fixed planar portion and a second position that is in plane with the fixed planar portion.
Clause 8. The fastener assembly of clause 7, wherein the first position corresponds to a pre-installation position and the second position corresponds to an installed position.
Clause 9. The fastener assembly of clause 3, wherein the installation indicator is a quick response (QR) code.
Clause 10. The fastener assembly of clause 2, wherein the strap is a zip tie or a cable strap.
Clause 11. The fastener assembly of clause 2, wherein the head comprises a fixed planar portion coupled to the shank and two wing portions, wherein each of the two wing portions is coupled to the fixed planar portion via a hinge.
Clause 12. The fastener assembly of clause 11, wherein the fixed planar portion and two wing portions define an oval-shaped perimeter.
Clause 13. The fastener assembly of clause 2, wherein the flex leg feature is configured to move from the PIA position to an intermediary position upon installation into the component, allowing the lock tab to clear the flex leg feature and permitting the lock pin to be pushed to assume a final assembled position.
Clause 14. The fastener assembly of clause 2, wherein the base structure comprises a payload portion that defines one or more strap openings configured to receive the strap.
Clause 15. The fastener assembly of clause 2, wherein the lock tab is positioned on a first surface of the shank and the shank comprises a second lock tab positioned on a second surface of the shank that is opposed to the first surface.
Clause 16. The fastener assembly of clause 15, wherein the second lock tab is configured to engage with a second positioning edge of a second flex leg feature of a second leg of the pair of legs.
Clause 17. The fastener assembly of clause 2, wherein each of the pair of legs comprises an inner protrusion oriented toward a central longitudinal axis and an outer protrusion oriented away from the central longitudinal axis.
Clause 18. The fastener assembly of clause 17, wherein the lock pin is configured to engage the inner protrusion to bias the pair of legs away from the central longitudinal axis to engage the component via the outer protrusion.
Clause 19. The fastener assembly of clause 2, wherein the head comprises one or more ridge features configured to protect the at least one wing portions.
Clause 20. The fastener assembly of clause 2, wherein the shank comprises a protrusion feature configured to mitigate unwanted movements.

## Claims

1. A fastener assembly for coupling a tube via a strap to an opening formed in a component, the fastener assembly comprising:
a lock pin having a shank with a head,
wherein the shank comprises a lock tab, and
wherein the head comprises a fixed planar portion coupled to the shank and at least one wing portion coupled to the fixed planar portion via a hinge, and
wherein the head comprises an installation indicator positioned over at least a portion of each of the fixed planar portion and at least one wing portion; and
a base structure having a grommet portion that defines a grommet opening and a pair of legs resiliently coupled to the grommet portion and configured to couple with the opening,
wherein the grommet opening is configured to receive and secure at least a portion of the shank,
wherein a first leg of the pair of legs includes a flex leg feature formed therein and resiliently coupled thereto, the flex leg feature defining a positioning edge, and
wherein the lock tab is configured to engage with the positioning edge to secure the lock pin relative to the base structure in a part-in-assembly (PIA) position.

2. A fastener assembly for coupling a tube via a strap to an opening formed in a component, the fastener assembly comprising:
a lock pin having a shank with a head, wherein the shank comprises a lock tab; and
a base structure having a grommet portion that defines a grommet opening and a pair of legs resiliently coupled to the grommet portion and configured to couple with the opening,
wherein the grommet opening is configured to receive and secure at least a portion of the shank,
wherein a first leg of the pair of legs includes a flex leg feature formed therein and resiliently coupled thereto, the flex leg feature defining a positioning edge, and
wherein the lock tab is configured to engage with the positioning edge to secure the lock pin relative to the base structure in a part-in-assembly (PIA) position.

3. The fastener assembly of claim 2, wherein the head comprises an installation indicator.

4. The fastener assembly of claim 3, wherein the installation indicator is a fiducial marker.

5. The fastener assembly of claim 3, wherein the head comprises a fixed planar portion coupled to the shank and at least one wing portion coupled to the fixed planar portion via a hinge.

6. The fastener assembly of claim 5, wherein the wing portion is configured to pivot, bend, or move relative to the fixed planar portion.

7. The fastener assembly of claim 6, wherein the wing portion is movable between a first position that is transverse to the fixed planar portion and a second position that is in plane with the fixed planar portion, and optionally
wherein the first position corresponds to a pre-installation position and the second position corresponds to an installed position.

8. The fastener assembly of claim 3, wherein the installation indicator is a quick response (QR) code.

9. The fastener assembly of claim 2, wherein the strap is a zip tie or a cable strap.

10. The fastener assembly of claim 2, wherein the head comprises a fixed planar portion coupled to the shank and two wing portions, wherein each of the two wing portions is coupled to the fixed planar portion via a hinge, and optionally
wherein the fixed planar portion and two wing portions define an oval-shaped perimeter.

11. The fastener assembly of claim 2, wherein the flex leg feature is configured to move from the PIA position to an intermediary position upon installation into the component, allowing the lock tab to clear the flex leg feature and permitting the lock pin to be pushed to assume a final assembled position.

12. The fastener assembly of claim 2, wherein the base structure comprises a payload portion that defines one or more strap openings configured to receive the strap.

13. The fastener assembly of claim 2, wherein the lock tab is positioned on a first surface of the shank and the shank comprises a second lock tab positioned on a second surface of the shank that is opposed to the first surface, and optionally
wherein the second lock tab is configured to engage with a second positioning edge of a second flex leg feature of a second leg of the pair of legs.

14. The fastener assembly of claim 2, wherein each of the pair of legs comprises an inner protrusion oriented toward a central longitudinal axis and an outer protrusion oriented away from the central longitudinal axis, and optionally
wherein the lock pin is configured to engage the inner protrusion to bias the pair of legs away from the central longitudinal axis to engage the component via the outer protrusion.

15. The fastener assembly of claim 2, wherein the head comprises one or more ridge features configured to protect the at least one wing portions, or
wherein the shank comprises a protrusion feature configured to mitigate unwanted movements.
